# FASCICULE DE BREVET EUROPEEN

(11) **EP 4 078 569 B1**
(45) Date de publication et mention de la délivrance du brevet: **03.09.2025**
(21) Numéro de dépôt: 20821270.4
(22) Date de dépôt: 15.12.2020
(51) Int. Cl.: G10K 11/162, B60R 13/08, B62D 35/02, B62D 25/20

(54) **ECRAN DE PROTECTION ACOUSTIQUE**
AKUSTISCHE ABSCHIRMUNG
ACOUSTIC SHIELD

(30) Priorité: 16.12.2019 FR 1914500
(43) Date de publication de la demande: 26.10.2022
(73) Titulaire: TREVES PRODUCTS, SERVICES & INNOVATION, 75008 Paris (FR)
(72) Inventeur: LECOMTE, Alicia, 75008 Paris (FR); DELINSELLE, Eric, 75008 Paris (FR); CAPRON, Christophe, 75008 Paris (FR)
(74) Mandataire: Sayettat, Julien Christian
(86) Numéro de dépôt international: PCT/EP2020/086113
(87) Numéro de publication internationale: WO 2021/122523

(56) Documents cités:
- WO-A2-02/098643
- US-A1- 2003 176 131
- US-A1- 2006 099 393

## Description

L'invention concerne un écran de protection acoustique destiné à être monté sous un moteur de véhicule automobile.

Il est connu de réaliser un écran de protection acoustique destiné à être monté sous un moteur de véhicule automobile, ledit écran comprenant un corps fibreux et poreux thermo-comprimé à base de fibres de verre, lesdites fibres étant reliées entre elles par du polypropylène, sous formes de fibres, notamment de titre 6,7 dtex (1 dtex = 1 gramme / 10 kilomètres), qui a été amené à son point de fusion.

Un tel écran présente l'avantage, de par la porosité du corps, de permettre une absorption acoustique du bruit émis par le moteur.

Par ailleurs, l'emploi de fibre de verre permet de conférer au corps une très bonne rigidité.

Un tel écran est sujet, au cours de sa vie, à des projections de gravier qui sont très dommageables pour lui, les fibres de verre se rompant progressivement, ce qui conduit à sa dégradation prématurée.

Pour pallier cet inconvénient, il a été proposé de revêtir la face du corps exposée aux projections d'un film plastique permettant d'amortir le choc des gravillons et de préserver l'intégrité du corps.

Cependant, la mise en place d'un tel film conduit à un renchérissement du coût de fabrication de l'écran et aussi à son alourdissement.

Enfin, les fibres de verre telles que définies ci-dessus ne sont pas les fibres les plus appropriées pour réaliser une absorption acoustique optimale en raison de leur diamètre important, notamment de l'ordre de 10 à 30 microns. US2003/176131 divulgue un écran de protection acoustique connu.

L'invention a pour but de pallier ces inconvénients en proposant un écran qui présente un compromis optimisé entre les différentes exigences détaillées ci-dessus : la rigidité, la résistance à la projection de gravillons et enfin les propriétés d'absorption acoustique.

A cet effet, l'invention propose un écran de protection acoustique destiné à être monté sous un moteur de véhicule automobile, ledit écran comprenant un corps fibreux et poreux thermo-comprimé, les fibres constitutives dudit corps se répartissant selon les pourcentages en poids suivants :
- entre 15% et 25% de fibres d'absorption acoustique à base de polyéthylène téréphtalate (PET) et de titre compris entre 1,5 et 2 dtex,
- entre 30% et 40% de fibres naturelles pour apporter la tenue mécanique,
- entre 40% et 50% de fibres de liage en polypropylène assurant une liaison entre les fibres dudit corps suite à leur fusion.

Plus particulièrement, les fibres se répartissent selon les pourcentages en poids suivants :
- entre 18% et 22% de fibres d'absorption acoustique,
- entre 33% et 37% de fibres naturelles,
- entre 43% et 47% de fibres de liage.

Avec l'agencement proposé, on obtient un excellent compromis entre toutes les exigences sus mentionnées.

La présence de fibres d'absorption de faible titre, notamment de 1,7 dtex, permet de rehausser les propriétés d'absorption acoustique de l'écran.

Les fibres naturelles confèrent sa rigidité mécanique à l'écran.

Par ailleurs, les fibres d'absorption apportent également une contribution à la résistance de l'écran à la projection de gravillons.

Enfin, les fibres de liage permettent d'assurer la liaison inter-fibres.

A titre d'exemple, on peut utiliser des fibres de liage présentant un titre de 6,7 dtex avant leur fusion.

On dispose en définitive d'un écran essentiellement fibreux dont la rigidité, la résistance à la projection de gravillons et les propriétés d'absorption acoustique sont agencées au mieux de manière à trouver un compromis optimal entre toutes les exigences auxquelles doit répondre l'écran.

D'autres particularités et avantages de l'invention apparaîtront dans la description qui suit, faite en référence aux figures jointes, dans lesquelles :
[Fig.1] est un schéma de principe d'un dispositif de test de la résistance d'un échantillon à la projection de gravillons,
[Fig.2] est une représentation graphique de l'absorption acoustique (coefficient alpha) en fonction de la fréquence 1/3 octave (en Hertz), en champ diffus, d'échantillons issus d'un écran selon l'invention selon différentes compositions (courbe B : NFHFA ; courbe C : NFA ; courbe D : NFHA) et d'un échantillon issu d'un écran de référence (courbe A) selon l'art antérieur (50% en poids de fibres de verre / 50% en poids de liant polypropylène).

On décrit à présent un écran de protection acoustique destiné à être monté sous un moteur de véhicule automobile, ledit écran comprenant un corps fibreux et poreux thermo-comprimé, les fibres constitutives dudit corps se répartissant selon les pourcentages en poids suivants :
- entre 15% et 25% de fibres d'absorption acoustique à base de polyéthylène téréphtalate (PET) et de titre compris entre 1,5 et 2 dtex,
- entre 30% et 40% de fibres naturelles pour apporter la tenue mécanique,
- entre 40% et 50% de fibres de liage en polypropylène assurant une liaison entre les fibres dudit corps suite à leur fusion.

Selon une réalisation, les fibres se répartissent selon les pourcentages en poids suivants :
- entre 18% et 22% de fibres d'absorption acoustique, et notamment entre 19% et 21%,
- entre 33% et 37% de fibres naturelles, et notamment entre 34% et 36%,
- entre 43% et 47% de fibres de liage, et notamment entre 44% et 46%.

Selon une première composition (NFHA), les fibres naturelles sont des fibres de chanvre.

Selon une deuxième composition (NFHFA), les fibres naturelles se répartissent selon les pourcentages en poids suivants par rapport au corps :
- entre 10% et 15% de fibres de chanvre, et notamment entre 11% et 13%,
- entre 20% et 25% de fibres de lin, et notamment entre 22% et 24%.

Selon une troisième composition (NFA), les fibres naturelles se répartissent selon les pourcentages en poids suivants par rapport au corps :
- entre 10% et 15% de fibres de chanvre, et notamment entre 11% et 13%,
- entre 10% et 15% de fibres de lin, et notamment entre 11% et 13%,
- entre 9% et 13% de fibres de kenaf, et notamment entre 10% et 12%,

Selon une réalisation, les fibres naturelles sont pourvues d'un traitement anti-moisissure.

Selon une réalisation, au moins 90% des fibres naturelles présentent une longueur comprise entre 5 et 25 cm pour pouvoir contribuer de façon efficace à la tenue mécanique de l'écran.

Selon une réalisation, les fibres d'absorption acoustique à base de polyéthylène téréphtalate (PET) ont un titre de 1,7 dtex.

Selon une réalisation, les fibres de liage ont une longueur comprise entre 55 et 65 mm.

Selon une réalisation, le propylène constitutif des fibres de liage a subi une modification chimique rehaussant son point de fusion (fibres « warmstabilised »), le portant notamment à une température supérieure à 150°C, ce qui permet une meilleure résistance de l'écran en environnement chaud.

Pour déterminer la résistance à la projection de gravillons (appelée aussi « résistance au grenaillage ») on peut appliquer le protocole de test décrit ci-après.

Le principe est de bombarder de grenaille d'acier coulé, au travers d'une buse, l'échantillon à tester.

La résistance au grenaillage est caractérisée par le temps nécessaire pour percer l'échantillon.

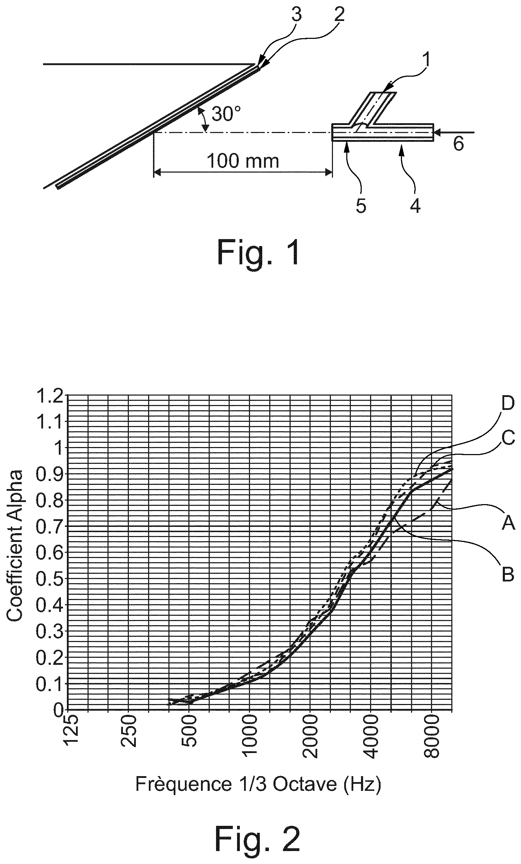

Les conditions opératoires de détermination de la résistance au grenaillage, dont un dispositif de test est schématisé en figure 1, sont les suivantes :
- la grenaille 1 est rendue angulaire par concassage de grenaille sphérique, de type « GP 14 Wheelabrator Allevard ».
- l'échantillon 2 est sous forme de plaque carrée de 150x150 mm ; son épaisseur est mesurée avec un micrométre à touche sur une surface d'environ 0,5 cm² sous une pression de 0,22 +/- 0,01 MPa ; il est fixé, par adhésion ou fixation mécanique (colle cyanoacrylique, film adhésif double face, etc.) sur une plaque de tôle 3 ; il est conditionné au préalable à une température de 24 +/- 4°C pendant 2 heures minimum, le test étant réalisé à la même température.
- un canon 4 de projection de grenaille est disposé à une distance de 100 +/- 1 mm de l'échantillon ; la tôle 3 est incliné de 30° par rapport à la buse 5 ; le diamètre de la buse 5 est de 10 +/- 0,1 mm ; le diamètre de l'injecteur d'air 6 est de 4 mm ; la longueur du canon 4 est de 111 mm ; une projection de 25 kg de grenaille 1 est réalisée sur l'échantillon 2 au travers de la buse 5 selon un débit de 2,6 +/- 0,5 kg/min, sous une pression de 3,2 +/- 1 bar.
- la résistance au grenaillage est définie par la moyenne arithmétique des résultats obtenus sur trois échantillons 2.

On présente ci-dessous une comparaison du module de flexion et du temps de résistance au grenaillage d'un échantillon issu d'écrans selon l'invention, selon diverses compositions, et d'un échantillon de référence issu d'un écran selon l'art antérieur (de composition 50% de polypropylène et 50% de fibres de verre).

Tous les échantillons testés présentent une épaisseur de 4 mm et une masse surfacique de 1000 g/m².

Les résultats obtenus sont les suivants :

**[Table 1]**

| | temps de tenue au grenaillage (s) | module de flexion (MPa) |
|---|---|---|
| Référence (50% verre / 50% polypropylène) | 35 | 614 |
| première composition (NFHA) | 103 | 448 |
| deuxième composition (NFHFA) | 146 | 571 |
| troisième composition (NFA) | 130 | 454 |

On observe que le remplacement des fibres de verre par des fibres naturelles et d'absorption conduit à une relativement faible dégradation des propriétés mécaniques (module de flexion) mais améliore de façon très significative la résistance au grenaillage.

On commente à présent les résultats de performances acoustiques illustrés en figure 2.

Les échantillons testés sont analogues à ceux testés en résistance au grenaillage en termes de composition, épaisseur et masse surfacique.

On note ici une amélioration de l'absorption acoustique avec la deuxième composition (NFHFA) à partir de 3000 Hz environ.

On note également une amélioration de l'absorption acoustique à partir de 3000 Hz environ avec les première (NFHA) et troisième (NFA) compositions, cette amélioration étant plus marquée que pour la deuxième composition (NFHFA).

En définitive, les compositions telles que définies par l'invention permettent une amélioration notable de la résistance au grenaillage, et ceci sans dégradation trop importante des propriétés mécaniques (module de flexion), et également une amélioration de l'absorption acoustique à partir de 3000 Hz environ.

## Revendications

1. Ecran de protection acoustique destiné à être monté sous un moteur de véhicule automobile, ledit écran comprenant un corps fibreux et poreux thermo-comprimé, ledit écran étant **caractérisé en ce que** les fibres constitutives dudit corps se répartissent selon les pourcentages en poids suivants :
• entre 15% et 25% de fibres d'absorption acoustique à base de polyéthylène téréphtalate (PET) et de titre compris entre 1,5 et 2 dtex (1 dtex = 1 gramme / 10 kilomètres),
• entre 30% et 40% de fibres naturelles pour apporter la tenue mécanique,
• entre 40% et 50% de fibres de liage en polypropylène assurant une liaison entre les fibres dudit corps suite à leur fusion.

2. Ecran selon la revendication 1, **caractérisé en ce que** les fibres se répartissent selon les pourcentages en poids suivants :
• entre 18% et 22% de fibres d'absorption acoustique,
• entre 33% et 37% de fibres naturelles,
• entre 43% et 47% de fibres de liage.

3. Ecran selon l'une des revendications 1 ou 2, **caractérisé en ce que** les fibres naturelles sont, selon une première composition, des fibres de chanvre.

4. Ecran selon l'une des revendications 1 ou 2, **caractérisé en ce que** les fibres naturelles se répartissent, selon une deuxième composition, selon les pourcentages en poids suivants par rapport au corps :
• entre 10% et 15% de fibres de chanvre, et notamment entre 11% et 13%,
• entre 20% et 25% de fibres de lin, et notamment entre 22% et 24%.

5. Ecran selon l'une des revendications 1 ou 2, **caractérisé en ce que** les fibres naturelles se répartissent, selon une troisième composition, selon les pourcentages en poids suivants par rapport au corps :
• entre 10% et 15% de fibres de chanvre, et notamment entre 11% et 13%,
• entre 10% et 15% de fibres de lin, et notamment entre 11% et 13%,
• entre 9% et 13% de fibres de kenaf, et notamment entre 10% et 12%,

6. Ecran selon l'une quelconque des revendications précédentes, **caractérisé en ce que** les fibres naturelles sont pourvues d'un traitement anti-moisissure.

7. Ecran selon l'une quelconque des revendications précédentes, **caractérisé en ce qu'**au moins 90% des fibres naturelles présentent une longueur comprise entre 5 et 25 cm.

8. Ecran selon l'une quelconque des revendications précédentes, **caractérisé en ce que** les fibres d'absorption acoustique à base de polyéthylène téréphtalate (PET) ont un titre de 1,7 dtex.

9. Ecran selon l'une quelconque des revendications précédentes, **caractérisé en ce que** les fibres de liage ont une longueur comprise entre 55 et 65 mm.

10. Ecran selon l'une quelconque des revendications précédentes, **caractérisé en ce que** le propylène constitutif des fibres de liage a subi une modification chimique rehaussant son point de fusion.

## Patentansprüche

1. Akustische Abschirmung, die dazu bestimmt ist, unter einem Kraftfahrzeugmotor montiert zu werden, wobei die Abschirmung einen thermokomprimierten faserigen und porösen Körper umfasst, wobei die Abschirmung **dadurch gekennzeichnet ist, dass** die Fasern, aus denen der Körper besteht, gemäß den folgenden Gewichtsprozentanteilen verteilt sind:
• zwischen 15 % und 25 % schallabsorbierende Fasern basierend auf Polyethylenterephthalat (PET) und mit einem Titer zwischen 1,5 und 2 dtex (1 dtex = 1 Gramm / 10 Kilometer),
• zwischen 30 % und 40 % Naturfasern, um den mechanischen Halt zu verleihen,
• zwischen 40 % und 50 % Bindefasern aus Polypropylen, die eine Verbindung zwischen den Fasern des Körpers infolge ihrer Verschmelzung gewährleisten.

2. Abschirmung nach Anspruch 1, **dadurch gekennzeichnet, dass** die Fasern gemäß den folgenden Gewichtsprozentanteilen verteilt sind:
• zwischen 18 % und 22 % schallabsorbierende Fasern,
• zwischen 33 % und 37 % Naturfasern,
• zwischen 43 % und 47 % Bindefasern.

3. Abschirmung nach einem der Ansprüche 1 oder 2, **dadurch gekennzeichnet, dass** die Naturfasern gemäß einer ersten Zusammensetzung Hanffasern sind.

4. Abschirmung nach einem der Ansprüche 1 oder 2, **dadurch gekennzeichnet, dass** die Naturfasern gemäß einer zweiten Zusammensetzung gemäß den folgenden Gewichtsprozentanteilen, bezogen auf den Körper, verteilt sind:
• zwischen 10 % und 15 % Hanffasern und insbesondere zwischen 11 % und 13 %,
• zwischen 20 % und 25 % Flachsfasern und insbesondere zwischen 22 % und 24 %.

5. Abschirmung nach einem der Ansprüche 1 oder 2, **dadurch gekennzeichnet, dass** die Naturfasern gemäß einer dritten Zusammensetzung gemäß den folgenden Gewichtsprozentanteilen, bezogen auf den Körper, verteilt sind:
• zwischen 10 % und 15 % Hanffasern und insbesondere zwischen 11 % und 13 %,
• zwischen 10 % und 15 % Flachsfasern, insbesondere zwischen 11 % und 13 %,
• zwischen 9 % und 13 % Kenaf-Fasern, insbesondere zwischen 10 % und 12 %.

6. Abschirmung nach einem der vorhergehenden Ansprüche, **dadurch gekennzeichnet, dass** die Naturfasern mit einer Behandlung gegen Schimmel versehen sind.

7. Abschirmung nach einem der vorhergehenden Ansprüche, **dadurch gekennzeichnet, dass** mindestens 90 % der Naturfasern eine Länge zwischen 5 und 25 cm aufweisen.

8. Abschirmung nach einem der vorhergehenden Ansprüche, **dadurch gekennzeichnet, dass** die schallabsorbierenden Fasern basierend auf Polyethylenterephthalat (PET) einen Titer von 1,7 dtex aufweisen.

9. Abschirmung nach einem der vorhergehenden Ansprüche, **dadurch gekennzeichnet, dass** die Bindefasern eine Länge zwischen 55 und 65 mm aufweisen.

10. Abschirmung nach einem der vorhergehenden Ansprüche, **dadurch gekennzeichnet, dass** das Propylen, aus dem die Bindefasern bestehen, einer chemischen Modifikation unterzogen wurde, die seinen Schmelzpunkt erhöht.

## Claims

1. Acoustic protection shield intended to be installed under a motor vehicle engine, said shield comprising a thermocompressed fibrous and porous body, said shield being **characterized in that** the fibers constituting said body are distributed according to the following percentages by weight:
- between 15% and 25% of sound-absorbing fibers made of polyethylene terephthalate (PET) and having a titre of between 1.5 and 2 dtex (1 dtex = 1 gram/10 kilometers),
- between 30% and 40% of natural fibers to provide mechanical strength,
- between 40% and 50% of polypropylene binding fibers ensuring a bond between the fibers of said body after they have melted.

2. Shield according to claim 1, **characterized in that** the fibers are distributed according to the following percentages by weight:
- between 18% and 22% of sound-absorbing fibers,
- between 33% and 37% of natural fibers,
- between 43% and 47% of binding fibers.

3. Shield according to one of claims 1 or 2, **characterized in that** the natural fibers are, according to a first composition, hemp fibers.

4. Shield according to one of claims 1 or 2, **characterized in that** the natural fibers are distributed, according to a second composition, according to the following percentages by weight relative to the body:
- between 10% and 15% of hemp fibers, and in particular between 11% and 13%,
- between 20% and 25% of flax fibers, and in particular between 22% and 24%.

5. Shield according to one of claims 1 or 2, **characterized in that** the natural fibers are distributed, according to a third composition, according to the following percentages by weight relative to the body:
- between 10% and 15% of hemp fibers, and in particular between 11% and 13%,
- between 10% and 15% of flax fibers, and in particular between 11% and 13%,
- between 9% and 13% of kenaf fibers, and in particular between 10% and 12%.

6. Shield according to any of the preceding claims, **characterized in that** the natural fibers are provided with an anti-mold treatment.

7. Shield according to any of the preceding claims, **characterized in that** at least 90% of the natural fibers have a length of between 5 and 25 cm.

8. Shield according to any of the preceding claims, **characterized in that** the sound-absorbing fibers made of polyethylene terephthalate (PET) have a titre of 1.7 dtex.

9. Shield according to any of the preceding claims, **characterized in that** the binding fibers have a length of between 55 and 65 mm.

10. Shield according to any of the preceding claims, **characterized in that** the propylene constituting the binding fibers has undergone a chemical modification enhancing its melting point.
